(19) Europäisches Patentamt / European Patent Office / Office européen des brevets

(11) EP 2 184 312 B1

(12) # EUROPÄISCHE PATENTSCHRIFT

(45) Veröffentlichungstag und Bekanntmachung des Hinweises auf die Patenterteilung:
**25.01.2012 Patentblatt 2012/04**

(51) Int Cl.:
***C08J 5/18*** *(2006.01)* ***C08K 5/1515*** *(2006.01)*

(21) Anmeldenummer: **09013792.8**

(22) Anmeldetag: **03.11.2009**

(54) **Biaxial orientierte hydrolysebeständige Polyesterfolie enthaltend epoxidierte Fettsäurederivate sowie Verfahren zu ihrer Herstellung und ihre Verwendung**

Biaxially oriented epoxidised fatty acid derivatives containing hydrolysis resistant polyester film and method for production of same and use of same

Feuille de polyester résistante à l'hydrolyse orientée de manière bi-axiale contenant des dérivés d'acide gras époxydes, ainsi que son procédé de fabrication et d'utilisation

(84) Benannte Vertragsstaaten:
**DE ES FR GB IT LU TR**

(30) Priorität: **11.11.2008 DE 102008056693**

(43) Veröffentlichungstag der Anmeldung:
**12.05.2010 Patentblatt 2010/19**

(73) Patentinhaber: **Mitsubishi Polyester Film GmbH**
**65203 Wiesbaden (DE)**

(72) Erfinder:
- **Kliesch, Holger**
  **65462 Ginsheim (DE)**
- **Klein, Dagmar**
  **55427 Ockenheim (DE)**
- **Kurz, Reiner**
  **65203 Bad Schwalbach (DE)**
- **Bröder, Dirk**
  **55444 Schweppenhausen (DE)**
- **Hilkert, Gottfried**
  **55291 Saulheim (DE)**
- **Schäfer, Volker**
  **67067 Ludwigshafen (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 1 634 914** **WO-A-2004/069912**
**DE-A1- 10 349 168**

EP 2 184 312 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine hydrolysebeständige Folie aus einem Polyester, deren Dicke im Bereich von 11 bis 500 μm liegt. Die Folie enthält mindestens zwei verschiedene Hydrolyseschutzmittel und zeichnet sich durch ihre geringe Hydrolysegeschwindigkeit und eine geringe Gelbildungstendenz in der Herstellung aus. Die Erfindung betrifft ferner ein Verfahren zur Herstellung der Folie sowie ihre Verwendung.

Folien aus Polyestern im angegebenen Dickenbereich sind hinreichend bekannt. Nachteilig an solchen Polyesterfolien ist jedoch ihre Hydrolyseneigung, insbesondere bei Temperaturen oberhalb der Glastemperatur des jeweiligen Polyesters. Unter Hydrolyseneigung wird hierbei die Eigenschaft des Polyesters verstanden, unter feuchten Bedingungen hydrolytisch abzubauen, welches beispielsweise an einer Reduzierung des IV- bzw. SV-Wertes erkennbar ist. Dies ist insbesondere bei Anwendungen mit höherer Temperaturbeanspruchung wie in Folienkondensatoren, Kabelummantelungen, Flachbandkabeln, Motorschutzfolien, aber auch in Langzeitanwendungen wie in Verglasungen und Außenanwendungen und insbesondere im Rückseitenlaminat von Solarmodulen ein limitierender Faktor für die Anwendung von Polyesterfolien.

Besonders ausgeprägt ist die Hydrolyseneigung bei aliphatischen Polyestern, aber auch bei aromatischen Polyestern wie Polybutylenterephthalat (PBT) und Polyethylenterephthalat (PET). Wenn die Hydrolyseneigung von PET zu groß für die Anwendung wird, muss man auf das hydrolysestabilere Polyethylennaphthalat (PEN) zurückgreifen oder sogar auf andere Polymere wie z. B. Polyetherimide oder Polyimide. Diese sind jedoch deutlich teurer als PET und deshalb häufig aus wirtschaftlichen Gründen keine Lösung.

Es wurde deshalb bereits vorgeschlagen, die Hydrolysestabilität von Polyesterfolien durch die Einarbeitung von Hydrolysestabilisatoren zu verbessern.

Hydrolysebeständigere Polyesterrohstoffe, die durch Verwendung von Carbodiimiden erhalten werden, sowie daraus hergestellte Fasern und Folien sind bekannt (US-A-5,885,709, EP-A-0 838 500, CH-A-621 135). Folien, die aus solchen Rohstoffen hergestellt werden, neigen jedoch sowohl in der Herstellung als auch in der späteren Verwendung zu Ausgasungen von Isocyanaten und anderen schleimhautreizenden bzw. gesundheitsschädlichen Neben- und Abbauprodukten. Dies ist bei flächigen Gebilden wie Folien mit großer Oberfläche ein weit größeres Problem als z. B. bei Spritzgussteilen.

Polyesterfolien mit epoxidierten Pflanzenölen als Stabilisator sind in EP-A-1 634 914 und EP-A-1 842 871 beschrieben. Hier treten die für Carbodiimide typischen toxischen Abbauprodukte nicht auf, die Einbindung in die Polyestermatrix ist bei geeigneter Auswahl der Öle gut, und es kommt zu einer guten Hydrolysestabilisierung der Folien. Als Nachteile treten aber bei der Anwendung in der Produktion immer wieder Produktionsintervalle mit extremer Neigung zur Gelbildung auf. Wenn das Gel-Level zu hoch wird, kommt es zu Abrissen und eine Produktion der Folie wird zeitweilig unmöglich. Die Produktion muss dann unterbrochen und die Extrusion gereinigt werden.

Zudem haben die dort beschriebenen Fettsäureester aufgrund ihres recht geringen Molekulargewichtes unter den Polyesterproduktionsbedingungen einen hohen Dampfdruck. Dies führt einerseits zu ihrem Ausgasen während der Produktion mit entsprechender Geruchsbelästigung und Fettsäureesterkondensaten auf Produktionsanlagenteilen und führt zudem zu einer erhöhten Migration dieser Moleküle aus der Folie, was in nachgeschalteten Verarbeitungsprozessen zu Haftungsproblemen in der Laminierung, Metallisierung usw. führen kann. Während der Herstellung gelangen diese Verbindungen zudem in das Extrudervakuum (bei Verwendung von Zwei/Mehrschneckenextrudern) und stehen so gar nicht mehr in der Folie als Hydrolysestabilisator zur Verfügung.

Aufgabe der vorliegenden Erfindung ist es, eine hydrolysebeständige Polyesterfolie zur Verfügung zu stellen, die die beschriebenen Nachteile des Standes der Technik vermeidet. Es soll insbesondere eine hydrolysestabile Folie hergestellt werden, ohne dass im nennenswerten Umfange bei der Herstellung Gele auftreten. Die Folie soll sich dabei wirtschaftlich herstellen lassen.

Diese Aufgabe wird gelöst durch eine biaxial gestreckte Polyesterfolie, welche neben Polyester 0,1 bis 5 Gew.-% (bezogen auf das Gewicht der Folie) eines Hydrolysestabilisators auf Basis von epoxidierten Fettsäureestern und 0,2 bis 10 Gew.-% (bezogen auf das Gewicht der Folie) epoxidierten Fettsäureglyceriden enthält. Die epoxidierten Fettsäureester weisen dabei ein mittleres Molekulargewicht von mindestens 425 g/mol auf.

Die Folie enthält als Hauptbestandteil einen Polyester. Geeignete Polyester sind beispielsweise Polyethylenterephthalat (PET), Polyethylennaphthalat (PEN), Polybutylenterephthalat (PBT), Polytrimethylenterephthalat (PTT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PBT, PEN und PTT sowie deren Mischungen und Co-Polyester bevorzugt sind.

Zur Herstellung der Polyester können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA) auch Isophthalsäure (IPA), trans- und/oder cis-1,4-Cyclohexandimethanol (c-CHDM, t-CHDM oder c/t-CHDM), Neopentylglykol und andere geeignete Dicarbonsäurekomponenten (oder Dicarbonsäureester) und Diolkomponenten verwendet werden.

Bevorzugt sind Polyester, bei denen die Dicarbonsäurekomponente zu 90 Gew.-% (bezogen auf die Gesamtmenge der Dicarbonsäurekomponente) und mehr, insbesondere zu 95 Gew.-% und mehr, aus Terephthalsäure (TA) besteht. Bevorzugt sind weiterhin Polyester, bei denen die Diolkomponente zu 90 Gew.-% und mehr, insbesondere zu 93 Gew.-% (bezogen auf die Gesamtmenge der Diole) und mehr, aus Ethylenglycol (EG) besteht. Bevorzugt sind auch Polymere, bei denen der Diethylenglycolanteil (DEG) am Gesamtpolymer im Bereich von 0,25 bis 3 Gew.-% liegt. Besonders bevorzugt ist dabei ein DEG-Gehalt von 0,75 bis 1,5 Gew.-%, da in diesen Grenzen die stabilste Laufsicherheit erzielt wird bei gleichzeitig bester Hydrolysestabilität. Bei allen in diesem Absatz genannten Mengenangaben bleibt das Hydrolyseschutzmittel unberücksichtigt.

Die Folie gemäß der Erfindung kann weiterhin anorganische oder organische Partikel, die zur Einstellung der Oberflächentopographie oder Optik (Glanz, Trübung usw.) benötigt werden, enthalten. Solche Partikel sind z. B. Kalziumcarbonat, Apatit, Siliziumdioxid, Titandioxid, Aluminiumoxid, vernetztes Polystyrol, vernetztes Polymethylmethacrylat (PMMA), Zeolithe und andere Silikate wie Aluminiumsilikate. Diese Verbindungen werden im Allgemeinen in Mengen von 0,05 bis 5 Gew.-%, vorzugsweise 0,1 bis 0,6 Gew.-%, (bezogen auf das Gewicht der Folie) eingesetzt. Besonders bevorzugt sind dabei Kalziumcarbonat und Siliziumdioxid.

Die eingesetzten Teilchengrößen $d_{50}$ liegen zum Erreichen einer guten Laufsicherheit in der Produktion im Allgemeinen zwischen 0,1 und 20 $\mu$m und bevorzugt zwischen 0,3 und 7 $\mu$m und besonders bevorzugt zwischen 0,5 und 5 $\mu$m. Faserförmige anorganische Zuschlagstoffe wie Glasfasern sind ungeeignet, da sie die Produktion der Polyesterfolie durch viele Abrisse unwirtschaftlich machen.

Alle Partikelgrößenangaben beziehen sich auf den $d_{50}$-Wert vor der Einarbeitung der Partikel in das Polymer.

In einer bevorzugten Ausführungsform ist die Folie weiß. Als Weißpigment eignen sich insbesondere Titandioxid, Bariumsulfat oder inkompatible Polymere wie Polypropylen, Polyethylen oder COC (der Einsatz von inkompatiblen Polymeren ist gegenüber dem Einsatz von Weißpigmenten weniger bevorzugt, da die Wärmestabilität solcher Weißfolien weniger gut ist als die mit anorganischen Weißpigmenten) oder Kombinationen daraus. Diese werden dem Polyester zu 1 bis 35 Gew.-% zugegeben, wobei die bevorzugte Zugabemenge zwischen 2 und 20 Gew.-% (bezogen auf das Gesamtgewicht der Folie) liegt. Besonders bevorzugt enthält die Folie in dieser Ausführungsform zwischen 3 und 10 Gew.-% (bezogen auf das Gesamtgewicht der Folie) Weißpigment. Die eingesetzten Teilchengrößen $d_{50}$ liegen zum Erreichen einer guten Laufsicherheit und eines hohen Weißgrads im Allgemeinen zwischen 0,05 und 5 $\mu$m und bevorzugt zwischen 0,1 und 1 $\mu$m (gilt nur für anorganische Weißpigmente). Das bevorzugte Weißpigment ist $TiO_2$, da sich hierdurch bessere Bewitterungsstabilitäten erreichen lassen. Das Titandioxid ist dabei bevorzugt mit anderen Elementoxiden modifiziert und/oder gecoated (beschichtet). Bevorzugte Elemente sind Al, Si, V, P und Ca sowie Kombinationen daraus. Solche Pigmente sind z. B. in US 3,981,737 oder EP-A-0 861 299 beschrieben. Weiße Folien haben sich insbesondere in Außenanwendungen gegenüber klaren Folien als überlegen erwiesen. Der Grund dafür liegt auch in der geringeren Schädigung der Stabilisatoren durch Licht. Daher hat es sich als günstig erwiesen, wenn die Folien eine Transparenz (ASTM D1003) von < 60 %, bevorzugt von < 40 % aufweisen. Neben der Transparenz im sichtbaren Bereich hat es sich als günstig erwiesen, wenn die Transparenz im UV-A-Bereich bei 370 nm bei < 20 % und bevorzugt bei < 10 % und idealerweise bei kleiner 5 % liegt.

Neben den erwähnten Additiven kann die Folie zusätzlich weitere Komponenten wie Flammschutzmittel (bevorzugt organische Phosphorsäureester) und/oder Radikalfänger/Antioxidantien und/oder UV-Stabilisatoren und /oder Kettenverlängerer enthalten. Eine Auswahl geeigneter Antioxidantien und UV-Stabilisatoren findet sich in FR 2 812 299.

Neben den erfindungsgemäßen Polyestern, den Pigmenten (oder weniger bevorzugt unverträglichen Polymeren als Weißpigment), den Hydrolysestabilisatoren und im vorherigen Absatz erwähnten weiteren Additiven enthält die Folie üblicherweise weniger als 5 Gew.-%, besonders bevorzugt weniger als 1 Gew.-% und idealerweise gar keine weiteren Additive, insbesondere keine weiteren Polymere, da diese in gestreckten Folien generell die mechanischen Eigenschaften verschlechtern.

Die erfindungsgemäße Folie enthält ein Gemisch aus mindestens zwei Hydrolysestabilisatoren. Der eine wird ausgewählt aus der Gruppe der epoxidierten Fettsäureglyceride. Der Anteil dieser Komponente liegt zwischen 0,2 und 10 Gew.-% (bezogen auf das Gewicht der Folie), bevorzugt bei 1,0 bis 7 Gew.-% und besonders bevorzugt bei 2,5 bis 6 Gew.-%. Der zweite wird ausgewählt aus der Gruppe der epoxidierten Fettsäureester. Der Anteil dieser Komponente liegt zwischen 0,1 und 5 Gew.-% (bezogen auf das Gewicht der Folie), bevorzugt bei 0,2 bis 3 Gew.-% und besonders bevorzugt bei 0,3 bis 1,5 Gew.-%.

Geeignete epoxidierte Fettsäureglyceride sind Mischungen von Glycerinestern oder reine Glycerinester, wobei die Glycerinester bevorzugt durch die folgende Formel beschrieben werden:

Formel 1: $CH_2OR_1\text{-}CHOR_2\text{-}CH_2OR_3$

wobei $R_1$ und $R_2$ und $R_3$ sowohl gleich als auch verschieden sein können.
$R_1$, $R_2$ und $R_3$ folgen bevorzugt der folgenden Formel:

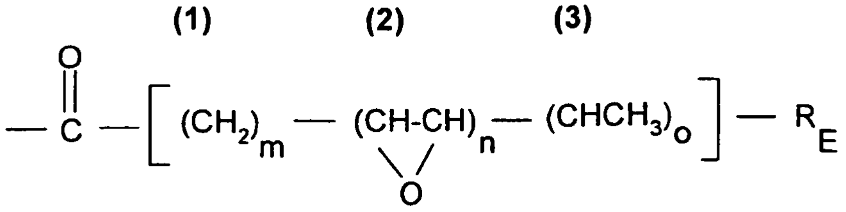

wobei
$R_E = CH_3$ oder H,
m = 1 - 40, bevorzugt 7 - 20, besonders bevorzugt 10 - 16,
n = 0 - 10, bevorzugt 1 - 4, besonders bevorzugt 2 - 3, und
o = 0 - 4, bevorzugt 0,
ist.

Im Mittel liegt m üblicherweise zwischen 9 und 16 und besonders bevorzugt zwischen 11 und 13. n liegt im Mittel üblicherweise zwischen 1 und 3 und bevorzugt zwischen 1,5 und 2,75 und besonders bevorzugt zwischen 2 und 2,5. o liegt üblicherweise im Mittel bei <0,5.

Die Reihenfolge der einzelnen Methylen ($CH_2$)- (1), Epoxid (CHOCH)- (2) und ($CHCH_3$)- (3) Gruppen ist dabei beliebig, wobei üblicherweise mindestens 2 Methylengruppen (1) und besonders bevorzugt 7 Methylengruppen (1) auf die Carbonylgruppe folgen, bevor eine oder mehrere der Gruppen (2) oder (3) folgen und dann wieder bevorzugt mindestens eine Methylengruppe (1) folgt.

Reste $R_{1,2,3}$ mit m = 0 in Glycerinestermischungen sind zu weniger als 30 und bevorzugt zu weniger als 20 Gew.-% und besonders bevorzugt zu weniger als 10 Gew.-% (bezogen auf das Gesamtgewicht der Glycerinester) enthalten.

Einer oder mehrere der Reste $R_1$ und $R_2$ und $R_3$ können dabei unabhängig voneinander auch folgende Bedeutung haben:

$R_{1,2,3}$ = H
$R_{1,2,3}$ = ungesättigte (doppelbindungshaltige bzw. nicht vollständig epoxidierte) C8 - C40-Fettsäure
$R_{1,2,3}$ = $(PO_2)$-O-$(CH_2)_2$-$N(CH_3)_3$
$R_{1,2,3}$ = anderer nicht näher definierbarer organischer Rest (da meist biogenen Ursprungs);

wobei aber solche Glycerinester weniger bevorzugt sind und Glycerinester, die diese Reste enthalten, in Glycerinestermischungen bevorzugt zu weniger als 20 und besonders bevorzugt zu weniger als 5 Gew.-% enthalten sind; d. h. dass die zuvor genannten bevorzugten Glycerinester in Glycerinestermischungen üblicherweise zu mehr als 80 und besonders bevorzugt zu mehr als 95 Gew.-% enthalten sind.

Da es sich bei den eingesetzten Glycerinestern bevorzugt um epoxidierte Öle biogenen Ursprungs handelt, enthalten diese neben den Glycerinestern meist noch geringe Mengen anderer Substanzen (Proteine usw.). Der Anteil dieser Substanzen liegt üblicherweise bei unter 10 Gew.-% und bevorzugt bei unter 2 Gew.-%, bezogen auf das Gesamtgewicht der Hydrolysestabilisatoren.

Insbesondere der Anteil von Verbindungen mit einem Siedepunkt unter 210 °C liegt üblicherweise bei weniger als 5 Gew.-% und bevorzugt bei weniger als 1 Gew.-%, bezogen auf das Gesamtgewicht der Hydrolysestabilisatoren.

Geeignete epoxidierte Fettsäureester bzw. Mischungen epoxidierter Fettsäureester können durch die folgende Formel beschrieben werden:

Formel 2: $R_4OR_5$

wobei $R_4$ bevorzugt durch die folgende Formel beschrieben wird:

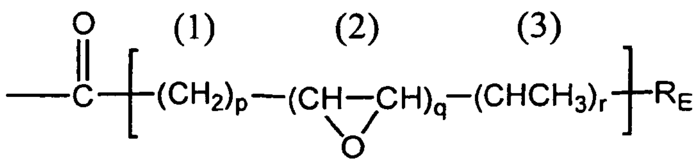

wobei
$R_E$= $CH_3$ oder H,
p = 1 - 40, bevorzugt 7 - 20, besonders bevorzugt 10 - 16,
q = 0 - 10, bevorzugt 1 - 4, besonders bevorzugt 2 - 3, und
r = 0 - 4, bevorzugt 0,
ist.

Im Mittel liegt p üblicherweise zwischen 9 und 16 und bevorzugt zwischen 11 und 13. q liegt im Mittel üblicherweise zwischen 1 und 3 und bevorzugt zwischen 1,2 und 2,5. r liegt üblicherweise im Mittel bei <0,5.

Die Reihenfolge der einzelnen Methylen ($CH_2$)- **(1),** Epoxid (CHOCH)- **(2)** und ($CHCH_3$)- **(3)** Gruppen ist dabei beliebig, wobei üblicherweise mindestens 2 Methylengruppen **(1)** und besonders bevorzugt 7 Methylengruppen **(1)** auf die Carbonylgruppe folgen, bevor eine oder mehrere der Gruppen **(2)** oder **(3)** und dann bevorzugt wieder mindestens einmal **(1)** folgen.

Der Rest $R_5$ wird bevorzugt durch die folgende Formel beschrieben:

Formel 3: $-(CH_2)_s-R_6$

wobei s = 0 - 50, bevorzugt 1 - 20, und besonders bevorzugt 1 - 8, ist.
$R_6$ ist bevorzugt
H oder
$C_tH_{(2t+1)}$ mit t = 3-10, bevorzugt 5-8,
besonders bevorzugt

$-CH(CH_2-CH_3)-(CH_2)_3-CH_3$.

Solche Verbindungen werden beispielsweise von Arkema, USA, unter dem Namen Vikoflex® 9080 vertrieben.

Bevorzugt ist
$R_6 = O-((CH_2)_u-O)_v-Y$, wobei
u bevorzugt = 2 - 5 und
v bevorzugt = 2 - 5000 und
Y = H oder $CH_3$ ist.

Besonders bevorzugt ist

$R_6 = O-R_4$, wobei $R_4$ dem $R_4$-Rest aus Formel 2 entspricht.

Solche Verbindungen werden beispielsweise von Arkema, USA, unter dem Namen Vikoflex 5075 vertrieben und werden im Folgenden als Fettsäurediester bezeichnet.

$R_6$ kann auch -OH sein, diese Ausführungsform ist aber weniger bevorzugt.

Die epoxidiertern Fettsäurester enthalten üblicherweise weniger als 10 Gew.-% und bevorzugt weniger als 5 Gew.-% (bezogen auf das Gesamtgewicht der eingesetzten Fettsäureester) weitere Verbindungen, die nicht durch Formel 2 beschrieben sind; d. h. dass die zuvor genannten epoxidierten Fettsäureester in Mischungen solcher Ester üblicherweise zu mehr als 90 und besonders bevorzugt zu mehr als 95 Gew.-% enthalten sind.

Die Säurezahl der eingesetzten Hydrolysestabilisatoren liegt üblicherweise bei unter 10 und bevorzugt unter 2 mg KOH pro Gramm (DIN EN ISO 3682). Je höher die Säurezahl ist, desto höher ist die Gelbildungstendenz.

Für die Einarbeitung und für die Effektivität der Hydrolyseschutzwirkung hat es sich als günstig erwiesen, wenn die Viskosität der eingesetzten Stabilisatoren größer als 300 mPa·s, bevorzugt größer als 500 mPa·s und besonders bevorzugt größer als 700 mPa·s bei 25 °C ist (DIN 53018). Je niedriger die Viskosität ist, desto höher ist das Risiko von Viskositätsausschlägen nach unten in der Extrusion, die zu Abrissen führen können.

Geeignete epoxidierte Fettsäureglyceride sind z. B. epoxidiertes Sojabohnenöl, epoxidiertes Leinöl, epoxidiertes Rüböl, epoxidiertes Sonnenblumenöl und epoxidiertes Fischöl (die Zusammensetzung der genannten Öle, insbesondere die Art und Menge der vorhandenen Fettsäuren, ist beispielsweise beschrieben in Römpp Chemie Lexikon, 10. Auflage, Georg Thieme Verlag, Stuttgart, DE). Besonders bevorzugt wird epoxidiertes Leinöl eingesetzt. Die epoxidierten Fettsäureester können aus den oben genannten Ölen durch Umsetzung mit den entsprechenden Alkoholen (bzw. geeigneten Alkoholderivaten) gewonnen werden. Bei der Umsetzung mit Diolen entstehen die besonders bevorzugten Fettsäurediester.

Die Hydrolyseschutzmittel senken tendenziell die mechanische Festigkeit und Reißdehnung der biaxial gestreckten Polyesterfolien. Sie führen zudem tendenziell zu einer geringeren Spannungsfestigkeit in den bevorzugten Elektroisolieranwendungen und verschlechtern das Verhalten der Folie in Laminierprozessen, durch geringere Haftung der üblicherweise verwendeten Klebersysteme. Daher sollte die Summe aus beiden Hydrolyseschutzmitteln zweckmäßigerweise bei < 10 Gew.-% liegen, bevorzugt bei < 7 Gew.-% und besonders bevorzugt bei < 5 Gew.-% (bezogen auf das Gesamtgewicht der Folie). Die Summe beider Hydrolysestabilisatoren beträgt üblicherweise mindestens 1 Gew.-

% und bevorzugt mindestens 2 Gew.-%, damit ein effektiver Hydrolyseschutz und eine gleichmäßige Einmischung in die Polymermatrix gewährleistet ist.

Der Anteil der durch Formel 1 beschriebenen Fettsäureglyceride am Gesamthydrolysestabilisatoranteil liegt üblicherweise bei > 40 Gew.-%. Besonders günstig ist ein Anteil größer 66 Gew.-% und am günstigsten ein Anteil > 80 Gew.-%. Der Anteil der durch Formel 2 beschriebenen Fettsäureester am Gesamthydrolysestabilisatoranteil liegt zweckmäßigerweise bei > 5 Gew.-% und bevorzugt bei > 10 Gew.-% und besonders bevorzugt bei > 15 Gew.-%.

Diese Mengenverhältnisse sind vorteilhaft, da sich gezeigt hat, dass die Hydrolyseschutzwirkung der Fettsäureglyceride um ein Vielfaches größer ist als die der entsprechenden Fettsäureester. Die Fettsäureester stoppen die Vergelung, tragen selbst aber weniger zur Hydrolysestabilisierung bei.

Es hat sich dabei gezeigt, dass die Wirkung der Fettsäureester als Hydrolysestabilisatoren geringer ist, wenn die mittlere Anzahl der Epoxygruppen pro Molekül deutlich kleiner ist als 2. Die mittlere Anzahl der Epoxygruppen ist daher in einer bevorzugten Ausführungsform größer als 1,5, besonders bevorzugt größer als 1,6 und ganz besonders bevorzugt >1,7. Die mittlere Anzahl der Epoxygruppen ist eine mittlere Anzahl und nicht ganzzahlig, weil auch die Fettsäureester in der Regel aus natürlichen Ölen gewonnen werden, die aus einer Mischung verschiedener Fettsäuren bestehen. Nur bei einem hohen Anteil mehrfach ungesättigter Fettsäuren im Ausgangsöl lassen sich aus diesem Fettsäureester gewinnen, die die oben beschriebenen mittleren Epoxygruppengehalte erreichen, oder bei Verwendung von Fettsäurediestern. Überraschenderweise hat sich gezeigt, dass weder Fettsäureester mit hoher mittlerer Anzahl von Epoxygruppen (>1,7 pro Molekül) noch die Fettsäurediester selbst zur Vergelung beitragen.

Die Fettsäureester haben jedoch häufig einen Nachteil, nämlich ein geringeres Molekulargewicht als die Fettsäureglyceride. Dies führt bei Verwendung der prozesstechnisch günstigen Mehrschneckenextruder, die alle mit Entgasungen arbeiten, zu einem Eintrag dieser Verbindungen in das Extrudervacuum, mit dem Risiko von potentiellen Schäden dort. Vor allem führt es dazu, dass die abgezogenen Anteile im Polyester weder als Hydrolysestabilisator zur Verfügung stehen noch die Vergelung durch die eingesetzten Fettsäureglyceride stoppen können. Der in der Schmelzeentgasung nicht abgezogene Anteil neigt dann - im weiteren Herstellprozess - an der Düse und im Fixierrahmen zur Ausgasung mit unerwünschtem Eintrag in die Raumluft und Niederschlägen an kühleren Maschinenteilen. Dieser Nachteil wird vermieden, wenn das mittlere Molekulargewicht der erfindungsgemäß eingesetzten epoxidierten Fettsäureester größer/gleich 425 g/mol ist. Besonders gute Resultate werden erzielt, wenn das Molekulargewicht größer/gleich 450 g/mol ist und die besten Resultate, wenn das Molekulargewicht über 550 g/mol liegt. Wenn es sich um einen reinen (Gehalt > 95 Gew.-%) epoxidierten Ester handelt, dann beziehen sich diese Grenzen auf diese eingesetzte Nennsubstanz. Wenn es sich um epoxidierte Ester aus natürlichen Quellen handelt, die nicht speziell isoliert wurden, ist das Molekulargewicht (solcher epoxidierter Fettsäureestermischungen) nicht immer einfach zu bestimmen. Es wird dann die Fettsäurezusammensetzung des Ausgangsöls bestimmt und anschließend von einer vollständigen Umsetzung mit dem/den zur Fettsäureesterbildung gewählten Alkohol/en und vollständiger Epoxidierung ausgegangen (für die Bestimmung der prozentualen Fettsäurezusammensetzung wird die Methode 3.7 in Kapitel 7 des Schweizerischen Lebensmittelbuchs [Stand Juli 2000] angewendet; dabei werden durch alkalische Transmethylierung der Fettsäureester im Lebensmittel die Fettsäuremethylester (FAME) gebildet, welche anschließend mittels GC/FID bestimmt werden). So können die mittleren Molekulargewichte kalkuliert werden. Wenn das Ausgangsöl unbekannt ist, muss das epoxidierte Öl über GC oder Flüssigchromatographie getrennt werden, die Einzelkomponenten mittels Massenspektroskopie bestimmt werden und so das mittlere Molekulargewicht ermittelt werden. Besonders geringe Flüchtigkeiten weisen die bevorzugten Fettsäurediester auf.

Weiterhin hat es sich als günstig erwiesen, wenn der Folie ein Stabilisator in Form eines Radikalfängers hinzugegeben wird, da dadurch dem Verlust an aktiven Oxirangruppen in der Extrusion durch radikalische Nebenreaktionen entgegengewirkt wird. Zweckmäßigerweise enthält die erfindungsgemäße Folie solche Stabilisatoren als Radikalfänger bzw. Thermostabilisatoren in Mengen von 50 bis 15000 ppm, bevorzugt 100 bis 5000 ppm, besonders bevorzugt 300 bis 1000 ppm, bezogen auf das Gewicht der Folie. Die dem Polyesterrohstoff zugegebenen Stabilisatoren werden beliebig ausgewählt aus der Gruppe der primären Stabilisatoren wie sterisch gehinderte Phenole oder sekundäre aromatische Amine oder der Gruppe der sekundären Stabilisatoren wie Thioether, Phosphite und Phosphonite sowie Zinkdibutyl-dithiocarbamat oder synergistische Mischungen aus primären und sekundären Stabilisatoren. Bevorzugt sind die phenolischen Stabilisatoren. Zu den phenolischen Stabilisatoren zählen insbesondere sterisch gehinderte Phenole, Thio-bisphenole, Alkyliden-bisphenole, Alkyl-phenole, Hydroxybenzyl-Verbindungen, Acyl-amino-phenole und Hydroxyphenylpropionate (entsprechende Verbindungen sind beispielsweise beschrieben in "Kunststoffadditive", 2. Ausgabe, Gächter Müller, Carl Hanser-Verlag, und in "Plastics Additives Handbook", 5. Ausgabe, Dr. Hans Zweifel, Carl Hanser-Verlag). Besonders bevorzugt sind die Stabilisatoren mit folgenden CAS-Nummern: 6683-19-8, 36443-68-2, 35074-77-2, 65140-91-2, 23128-74-7, 41484-35-9, 2082-79-3 sowie ®Irganox 1222 der Firma Ciba Specialities, Basel, Schweiz, wobei in besonderen Ausführungsformen die Typen ®Irganox 1010, ®Irganox 1222, ®Irganox 1330 und ®Irganox 1425 oder Mischungen daraus bevorzugt sind.

Überraschenderweise hat es sich als günstiger erwiesen, wenn der Radikalfänger nicht dem Hydrolysestabilisator, sondern dem Polyesterrohstoff bereits bei der Polymerherstellung hinzugegeben wird.

Die Hydrolyseschutzmittel werden bevorzugt direkt bei der Folienherstellung in den Extruder dosiert. Bevorzugt werden Mehrschneckenextruder (mindestens 2 Schnecken) eingesetzt.

Die Hydrolyseschutzmittel können auch über die Masterbatchtechnologie eingebracht werden. D. h. das Hydrolyseschutzmittel wird in einem Extruder (bevorzugt ein Mehrschneckenextruder) in das Polymer eingebracht. Diese/s Polymer/e wird/werden dann bei der Folienherstellung pur, oder mit anderen Polymeren gemischt, erneut extrudiert. Dieses Verfahren ist jedoch weniger bevorzugt, da bereits im ersten Extrusionsschritt Hydrolyseschutzmittel verbraucht (abreagiert) wird, welches dann in der Folie nicht mehr als aktive Substanz zur Verfügung steht.

Die Folie gemäß der Erfindung wird im allgemeinen nach an sich bekannten Extrusionsverfahren hergestellt und ist ein- oder mehrschichtig, wobei der Hydrolysestabilisator in allen Schichten enthalten sein kann, jedoch auch Ausführungen möglich sind, in denen nicht alle Schichten mit dem Hydrolysestabilisator ausgerüstet sind.

Die Foliendicke liegt bevorzugt zwischen 11 und 500 µm und besonders bevorzugt zwischen 24 und 300 µm. In mehrschichtigen Ausführungsformen ist die Summe der Dicken der Hydrolysestabilisator-haltigen Schichten üblicherweise größer als 10 µm und kleiner als 500 µm und besonders bevorzugt > 40 µm und kleiner als 300 µm. Bei sehr dicken Schichten treten eher Viskositätsunregelmäßigkeiten in der Produktion auf. Gesamtschichtstärken der Hydrolysestabilisator-haltigen Schichten unterhalb des bevorzugten Bereiches reichen in Außenanwendungen (bei Verwendung nur einer solchen Folienlage) in der Regel nicht aus, um die gesamte Folie über die erwartete Verwendungszeit hinweg ausreichend zu stabilisieren.

In einer bevorzugten Ausführungsform enthält die Folie mindestens auf einer Seite, bevorzugt auf beiden Seiten eine Deckschicht, welche keinen Hydrolysestabilisator enthält. Diese Schichten werden bevorzugt so dünn wie möglich ausgeführt, um die Hydrolysestabilität der Gesamtfolie so wenig wie möglich zu beeinträchtigen. D. h. diese Schichten sind bevorzugt jeweils dünner als 5 µm, besonders bevorzugt dünner als 3 µm und idealerweise dünner als 0,8 µm. Es hat sich jedoch als günstig erwiesen, wenn die Schicht nicht dünner als 0,1 µm ist (unterhalb von 0,1 µm ist keine ausreichende Barriere gegen die Migration der Hydrolysestabilisatoren mehr vorhanden).

Die Hydrolysestabilisator-freien Schichten können prinzipiell die gleichen Polymere und Zusatzstoffe (mit Ausnahme der beschriebenen Hydrolysestabilisatoren) enthalten wie die Schicht/Schichten, welche den Hydrolysestabilisator enthält. Es hat sich jedoch als günstig erwiesen, wenn der Polyesterrohstoff der Hydrolysestabilisator-freien Schichten einen möglichst geringen Gehalt an Carboxylendgruppen aufweist. Solche Rohstoffe sind u. a. in EP-A-0 738 749 beschrieben. In einer bevorzugten Ausführung ist der Carboxylgehalt ausgedrückt in mmol$H^+$/kg Polymer (gewichteter Mittelwert aller eingesetzten Polymere) kleiner 25, besonders bevorzugt kleiner 15 und idealerweise < 8 mmol$H^+$/kg Polymer. Solche Werte können z. B. durch Feststoffkondensation oder durch Endcapping erreicht werden. Die Viskosität der eingesetzten Rohstoffe liegt dabei üblicherweise zwischen einem IV von 0,61 und 0,75 (IV gemessen in Trichlorethan/ Phenol wie in US-A-3,432,591 beschrieben). Höhere IV-Werte wie z. B. in EP-A-0 738 749 beschrieben haben sich in der Praxis als eher ungünstig erwiesen, da die hohen Viskositäten im Extruder höhere Temperaturen bzw. höhere Scherraten benötigen und so die Hydrolyseneigung der Schmelze wächst. Die IV-Werte der Rohstoffe, welche in der/den Schicht/Schichten mit Hydrolysestabilisator zum Einsatz kommen, sollten ebenfalls bevorzugt bei 0,61-0,75 liegen. Insbesondere hat es sich als günstig erwiesen, wenn der Unterschied der IV-Werte der stabilisatorhaltigen Schicht (bei Schichten der Mittelwert) und der IV-Werte der Schicht ohne Hydrolysestabilisator (bei Schichten der Mittelwert) nicht größer als 0,1 und bevorzugt nicht größer als 0,03 ist. Die bevorzugte Ausführungsform mit mindestens einer Hydrolysestabilisator-freien Deckschicht führt in der Produktion zu einer geringeren Geruchsbelästigung durch die eingesetzten Fettsäureepoxide und ist besser metallisierbar und laminierbar (d. h. Metalle und Kleber haften besser auf dieser Schicht).

Bei dem Verfahren zur Herstellung der erfindungsgemäßen Folien wird zweckmäßigerweise so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt, biaxial gestreckt (orientiert) und die biaxial gestreckte Folie thermofixiert wird. Im Bereich der Extrusion hat es sich dabei als günstig erwiesen, wenn Temperaturen von 295 °C nicht überschritten werden. Besonders günstig ist es, wenn der Bereich der Düse und speziell der Bereich der Düsenlippe und nahe daran nicht wärmer als 290 °C, bevorzugt nicht wärmer als 285 °C und besonders bevorzugt nicht wärmer als 275 °C, ist. Je höher die Temperatur ist, desto höher ist der thermische Stress auf die Stabilisatoren und desto höher die Neigung zur Gelbildung. Eine höhere Temperatur an dieser Stelle erhöht zudem die Menge an austretenden Hydrolysestabilisatoren.

Die biaxiale Verstreckung wird im Allgemeinen sequentiell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im Allgemeinen wird die Längs- und auch die Querstreckung bei Tg + 10 °C bis $T_g$ + 60 °C ($T_g$ = Glastemperatur der Folie) durchgeführt. Das Längsstreckverhältnis liegt allgemein im Bereich von 2,0 : 1 bis 6,0 : 1, vorzugsweise 3,0 : 1 bis 4,5 : 1. Das Querstreckverhältnis liegt allgemein

im Bereich von 2,0 : 1 bis 5,0 : 1, vorzugsweise 3,0 : 1 bis 4,5 : 1, und das einer gegebenenfalls durchgeführten zweiten Längs- und Querstreckung liegt bei 1,1 : 1 bis 5,0 : 1.

Die Längsstreckung kann gegebenenfalls gleichzeitig mit der Querstreckung (Simultanstreckung) durchgeführt werden. Als besonders günstig hat es sich dabei erwiesen, wenn das Streckverhältnis in Längs- und Querrichtung jeweils größer als 3,0 ist.

Bei der nachfolgenden Thermofixierung wird die Folie etwa 0,1 bis 10 s lang bei einer Temperatur von 150 bis 260 °C, vorzugsweise 200 bis 245 °C, gehalten. Anschließend an beziehungsweise beginnend in der Thermofixierung wird die Folie um 0 bis 15 %, vorzugsweise um 1,5 bis 8 %, in Quer- und gegebenenfalls auch in Längsrichtung relaxiert und die Folie dann in üblicher Weise abgekühlt und aufgewickelt.

Eine auf diese Weise hergestellte Folie weist eine deutlich geringere Hydrolyseneigung sowohl bei Raumtemperatur als auch bei Temperaturen bis 210 °C auf als eine unmodifizierte Polyesterfolie. Gegenüber den in EP-A-1 634 914 beschriebenen Folien mit epoxidierten Fettsäureestern und Fettsäureglyceriden, bei denen die eingesetzten Fettsäureester nicht die hier genannten Bedingungen erfüllen, konnte die Produktivität wesentlich gesteigert werden, da es zu weniger Abrissen wegen Vergelung kam.

Die Stabilisierung ist dabei weitgehend unabhängig von der Foliendicke und der Temperatur in einem Messbereich von 25 bis 210 °C.

Die erfindungsgemäßen Folien weisen nach 96 h im Autoklaven bei Wasserdampfsättigung und 110 °C noch einen SV-Wert von über 600 auf und sind damit noch mechanisch stabil, während eine unstabilisierte Folie nach dieser Zeit bereits unter SV 400 abgefallen ist und damit so gut wie keine Biegebruchfestigkeit mehr aufweist. Die stabilisierte Folie hält 300 % länger unter den genannten Bedingungen aus, bis sie die kritische Grenze von 400 SV-Einheiten erreicht. Dieselbe relative Lebenszeitverlängerung findet man auch bei 80 °C und bei 170 °C.

Folien, die mittels der genannten Hydrolysestabilistoren stabilisiert werden, eignen sich hervorragend zur Herstellung von Produkten, die Polyesterfolien enthalten und entweder für eine lange Lebensdauer (größer 1 Jahr) ausgelegt sind oder die während ihres Einsatzes mit höheren Temperaturen (größer 80 °C), insbesondere bei hoher Feuchte (>50 % rel. Feuchte), konfrontiert werden, und für Außenanwendungen.

Eine weitere Anwendung sind z. B. Flachbandkabel in Automobilen. Hierzu werden Folien (bevorzugt 12 - 200 μm) mittels eines Heißsiegelklebers (z. B. EKP-Heißsiegellack 230 der Firma EKP Verpackungslacke GmbH (Deutschland)) mit Kupfer laminiert. Verbunde, die Polyester mit Hydrolyseschutzmittel enthalten, halten dabei den in Automobilen auftretenden mechanischen Belastungen (u. a. Vibrationen) weit länger Stand als Verbunde mit herkömmlichen Polyesterfolien. Hierbei ist jedoch darauf zu achten, dass auch die Kleber weitgehend hydrolyseunempfindlich sind (bei polyesterbasierten Klebern empfiehlt sich eine Ausrüstung mit den genannten Hydrolysestabilisatoren).

Eine weitere bevorzugte Anwendung ist die Verwendung im Rückseitenlaminat von Solarmodulen. Hier hat es sich als günstig erwiesen, wenn der Schrumpf der Folie (bei 150 °C, 30 min) in MD bei <1,5 % und TD bei <1,2 % liegt. Da die eingesetzten Stabilisatoren tendenziell zu einer Erhöhung der Schrumpfwerte führen, hat es sich als günstig erwiesen, wenn die Summe der Gew.-% der Hydrolysestabilisatoren in den bevorzugten Bereichen liegt und/oder wenn die maximale Fixiertemperatur > 225 °C ist und die Folie um mehr als 4 % in Querrichtung relaxiert wird. Die Dicke von in Solarmodulen eingesetzten Folien liegt üblicherweise bei > 25 μm und besonders bevorzugt bei > 45 μm.

In einer bevorzugten Ausführungsform für Elektroisolieranwendungen (wie z. B. Kabel und Rückseitenlaminate von Solarmodulen) hat die Folie in beiden Raumrichtungen einen E-Modul von größer 3000 $N/mm^2$ und besonders bevorzugt in beiden Raumrichtungen einen E-Modul von größer 4000 $N/mm^2$ und idealerweise größer 4500 $N/mm^2$. Dies hat den Vorteil einer besseren elektrischen Isolierwirkung gegenüber weniger orientierten Materialien. Erreicht werden diese Werte z. B. wenn die Summe der Gew.-% der Hydrolysestabilisatoren in den bevorzugten Bereichen liegt. Besonders gute mechanische Eigenschaften werden erreicht, wenn der Anteil der Fettsäuregyceride größer als 80 Gew.-%, bezogen auf den Gesamthydrolysestabilisatoranteil, ist. Insbesondere lassen sich die Festigkeitswerte dann erreichen, wenn das Streckverhältnis in beiden Richtungen größer als 3,1 bzw. besser größer als 3,3 ist.

In einer bevorzugten Ausführungsform für Elektroisolieranwendungen (wie z. B. Kabel und Rückseitenlaminate von Solarmodulen) weist die Folie eine Dichte von größer 1,1 $g/cm^3$, besonders bevorzugt von größer 1,3 $g/cm^3$ und idealerweise von größer 1,4 $g/cm^3$ auf. Hierdurch wird wie durch die hohe mechanische Festigkeit die Elektroisolierwirkung verbessert. Erreicht werden kann dies z. B. dadurch, dass die Summe der Gew.-% der Hydrolysestabilisatoren in den bevorzugten Bereichen liegt und/oder wenn die maximale Fixiertemperatur mindestens 200 °C beträgt.

In den nachfolgenden Ausführungsbeispielen erfolgt die Messung der einzelnen Eigenschaften gemäß den angeführten Normen bzw. Verfahren.

**Messmethoden**

**Standardviskosität (SV)**

Die Standardviskosität SV wird - angelehnt an DIN 53726 - durch die Messung der relativen Viskosität $\eta_{rel.}$

einer 1 Gew.-%igen Lösung in Dichloressigsäure (DCE) in einem Ubbelohde Viskosimeter bei 25 °C gemessen. Der SV-Wert ist wie folgt definiert:

$$SV = (\eta_{rel.} - 1) \bullet 1000$$

**Schrumpf**

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_{0\ TD}$ und $L_{0\ MD}$) und werden 15 min bei der angegeben Schrumpfungstemperatur (hier 200 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \bullet (L_{0\ MD} - L_{MD}) / L_{0\ MD}$$

$$\text{Schrumpf [\%] TD} = 100 \bullet (L_{0\ TD} - L_{TD}) / L_{0\ TD}$$

**Messung der Transparenz**

Die Messung erfolgt an einem Haze-gard Plus der Fa. BYK Gardner Instruments nach ASTM D 1003.

**Messung der Transparenz bei 370 nm**

Die Messung der Transparenz erfolgt mit einem Lambda 3 UV/Vis Spektrometer der Firma Perkin Elmer.

**Messung der Dichte**

Die Dichte kann in einer Gradientensäule (z. B. Tetrachlorkohlenstoff und Hexan) oder mittels eines Gaspyknometers (Helium oder Stickstoff) bestimmt werden.

**Messung des mittleren Partikeldurchmessers $d_{50}$ an Partikeln vor der Einbringung in den Rohstoff**

Die Bestimmung des mittleren Partikeldurchmessers $d_{50}$ wird mittels Laser auf einem Master Sizer (Malvern Instruments, UK) nach der Standardmethode durchgeführt (andere Messgeräte sind z. B. Horiba LA 500 (Horiba Ltd., Japan) oder Helos (Sympatec GmbH, Deutschland), welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert.

**Messung der mechanischen Eigenschaften der Folie**

Die Bestimmung der mechanischen Eigenschaften erfolgt nach DIN EN ISO 527-1 bis 3.

**Autoklavierung**

Die Folien (10 · 2 cm) werden an einem Draht in den Autoklaven (Adolf Wolf SANOklav Typ: ST-MCS-204) gehängt und der Autoklav mit 2 l Wasser befüllt. Nach dem Schließen des Autoklaven wird dieser erhitzt. Bei 100 °C wird die Luft durch den Wasserdampf über das Ablassventil verdrängt. Dies wird nach ca. 5 min geschlossen, worauf

die Temperatur auf 110 °C und der Druck auf 1,2 - 1,5 bar ansteigt. Nach der eingestellten Zeit wird der Autoklav automatisch abgeschaltet und nach Öffnen des Ablassventils die Folien entnommen. An diesen wird dann der SV-Wert bestimmt.

## Beispiele

Hydrolysestabilisator 1 (HStab 1)

Epoxidiertes Leinöl mit einem Epoxidsauerstoffgehalt von 8,9 % von Arkema, USA. Das Leinöl entspricht Formel 1 mit den Variablen in den dort angegebenen Größenordnungen.

Hydrolysestabilisator 2 (HStab 2)

Epoxidiertes Propylenglykoldioleat (Hauptkomponente) mit einem Epoxidsauerstoffgehalt von 4,6 % von Arkema, USA (Vikoflex 5075). Das mittlere Molekulargewicht wurde mit 605 ermittelt, die mittlere Anzahl der Epoxygruppen pro Molekül lag bei 1,85. Hstab 2 entspricht Formel 2 mit den Variablen in den dort angegebenen Größenordnungen.

Hydrolysestabilisator 3 (HStab 3)

2-Hexylethylester der epoxidierten Olivenölfettsäuren mit einem Anteil von Epoxistearinsäure (epoxidierte Ölsäure) von 61 Gew.-% mit einem Epoxidsauerstoffgehalt von 5,3 Gew.-% . Das mittlere Molekulargewicht lag bei 415, die mittlere Anzahl der Epoxygruppen pro Molekül lag bei 1,38. Hstab 3 entspricht Formel 2 mit den Variablen in den dort angegebenen Größenordnungen, allerdings liegt das Molekulargewicht außerhalb des erfindungsgemäßen Bereiches.

Weitere verwendete Rohstoffe

Rohstoff R1 PET (Invista, DE), SV-Wert 790, Carboxylendgruppengehalt 22 mmol/kg, Diethylenglykolgehalt 0,75 Gew.-%

Masterbatch MB1 20 Gew.-% $TiO_2$ (Hombitan LW-SU von Sachtleben, DE) und 80 Gew.-% PET, SV-Wert 790, Diethylenglykolgehalt 1 Gew.-%, Carboxylendgruppengehalt 42 mmol/kg (Zugabe $TiO_2$ durch Einarbeitung in PET in einem Zweischneckenextruder)

Folienherstellung:

Thermoplast-Chips (MB1 sowie R1) wurden gemäß den in den Beispielen angegebenen Verhältnissen gemischt und bei 278 °C in einem Zweischneckenextruder (JapanSteelWorks) extrudiert. Die Dosierung der Hydrolysestabilisatoren erfolgte direkt in den Extrudereinzug mittels einer Pumpe. Das geschmolzene Polymer wurde aus einer Düse über eine Abzugswalze abgezogen. Der Film wurde um den Faktor 3,4 in Maschinenrichtung bei 116 °C gestreckt und in einem Rahmen bei 110 °C eine Querstreckung um den Faktor 3,3 durchgeführt. Anschließend wurde die Folie bei 225 °C thermofixiert und in Querrichtung um 6 % bei Temperaturen von 200 bis 180 °C relaxiert. Die Endfoliendicke betrug 50 µm.

Die Eigenschaften der hergestellten Folien sind der nachstehenden Tabelle zu entnehmen:

**Tabelle**

| | | Beispiel 1 | Vergleichsbeispiel 1 | Vergleichsbeispiel 2 |
|---|---|---|---|---|
| R1 | Gew.% | 60,6 | 60,6 | 61 |
| MB1 | Gew.% | 36 | 36 | 36 |
| HStab 1 | Gew.-% | 3,0 | 2,55 | 3.0 |
| HStab 2 | Ges.-% | 0,4 | 0 | |
| HStab 3 | Gew.-% | | 0,85 | 0,0 |
| Foliendicke | µm | 50 | 50 | 50 |
| SV-Wert (nach Folienherstellung) | | 770 | 762 | 772 |

(fortgesetzt)

| | | Beispiel 1 | Vergleichsbeispiel 1 | Vergleichsbeispiel 2 |
|---|---|---|---|---|
| SV Wert nach 96 h bei 110 °C im Autoklav bei Wassersättigung | | 657 | 602 | 652 |
| E-Modul MD/TD) | $N/mm^2$ | 4910/4790 | 4870/4730 | 4920/4820 |
| Schrumpf in MDITD | % | 0,8/0,0 | 0,8/0,0 | 0,8/-0,1 |
| Dichte | $g/cm^3$ | 1,417 | 1,419 | 1.421 |
| Transparenz nach ASTM D1003 / Transparenz bei 370 nm | % | 28 / 0,5 | 29/0,5 | 29,5/0,5 29,5 / 0,5 |
| Viskositätsausschläge während der Produktion in der Extrusion mit Abrissfolge | Produktions dauer 24 h | 6 | 6 | 5 |
| Hydrolysestabilisator in der Kühlfalle des Extrudervakuums in % der in der Produktionszeit eingesetztem Hydrolysestabilisator | % | 2 | 16 | 1 |
| Anzahl der Ereignisse (X), an denen die Produktion wegen zu hohen Gellevels für mehrere Stunden unterbrochen werden musste | X pro Tag | 0 | 0,4 | 1 (kontinuierliche industrielle Produktion industriell Produktion schwierig) |

## Patentansprüche

1. Biaxial orientierte Polyesterfolie, welche 0,1 - 5,0 Gew.-% (bezogen auf das Gewicht der Folie) eines Hydrolysestabilisators auf Basis von epoxidierten Fettsäureestern und 0,2 - 10,0 Gew.-% (bezogen auf das Gewicht der Folie) epoxidierte Fettsäureglyceride enthält, wobei die epoxidierten Fettsäureester ein mittleres Molekulargewicht von mindestens 425 g/mol aufweisen.

2. Polyesterfolie nach Anspruch 1, wobei die Folie weiß ist.

3. Polyesterfolie nach Anspruch 1 oder 2, wobei die Folie ein oder mehrere Additive enthält, die ausgewählt werden aus der Gruppe, bestehend aus: anorganischen Partikeln, organischen Partikeln, Flammschutzmittel, Radikalfänger, Antioxidantien und UV-Stabilisatoren.

4. Polyesterfolie nach einem der vorhergehenden Ansprüche, wobei die Folie neben dem Polyester, dem Hydrolysestabilisator und dem Additiv nach Anspruch 3 weniger als 5 Gew.% weiterer Polymere enthält.

5. Polyesterfolie nach einem der vorhergehenden Ansprüche, wobei mehr als 80 Gew.-% der eingesetzten epoxidierten Fettsäureglyceride Glycerinester der Formel 1 wind,

Formel 1: $CH_2OR_1\text{-}CHOR_2\text{-}CH_2OR_3$

wobei die Reste $R_1$, $R_2$ und $R_3$ unabhängig voneinander die folgende Bedeutung haben:

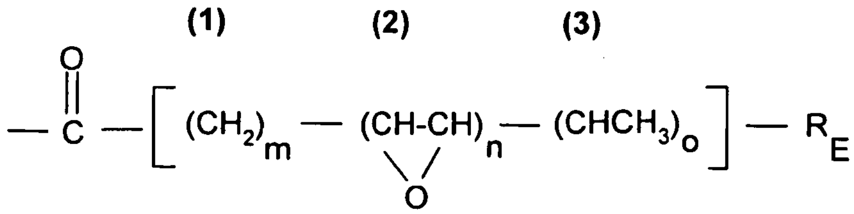

wobei
$R_E$= $CH_3$ oder H,
m = 1 - 40,
n = bis 10 und

o= 0-4
ist und wobei die Reihenfolge der einzelnen Methylen ($CH_2$)- **(1),** Epoxid (CHOCH)- **(2)** und ($CHCH_3$)- **(3)** Gruppen beliebig ist
und wobei Reste $R_{1,2,3}$ mit m = 0 in Glycerinestermischungen zu weniger als 30 Gew.-% (bezogen auf das Gesamtgewicht der Glycerinester) enthalten sind.

**6.** Polyesterfolie nach einem der vorhergehenden Ansprüche, wobei mehr als 90 Gew.-% der eingesetzten epoxidierten Fettsäureester Ester der Formel 2 sind:

Formel 2: $R_4OR_5$

wobei $R_4$ folgende Bedeutung hat:

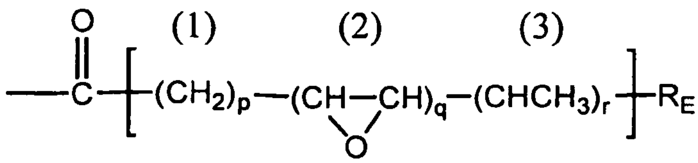

wobei
$R_E$= $CH_3$ oder H,
p = 1 - 40,
q =bis 10, und
r = 0 - 4
ist und wobei die Reihenfolge der einzelnen Methylen (**$CH_2$**)- (**1**), Epoxid (CHOCH)- **(2)** und ($CHCH_3$)- **(3)** Gruppen beliebig ist
und wobei der Rest $R_5$ durch die folgende Formel 3 beschrieben ist:

Formel 3: $-(CH_2)_s-R_6$

wobei
s = 0 - 50 und
$R_6$ = H, OH oder $C_tH_{(2t+1)}$ mit t = 3-10,
$O-((CH_2)_u-O)_v-Y$ mit u = 2-5, v = 2-5000 und Y = H oder $CH_3$ oder $O-R_4$ , wobei $R_4$ dem $R_4$ -Rest aus Formel 2 entspricht.

**7.** Polyesterfolie nach einem der vorhergehenden Ansprüche, wobei die Säurezahl der eingesetzten Hydrolysestabilisatoren bei unter 10 mg KOH pro Gramm liegt (DIN EN ISO 3682).

**8.** Polyesterfolie nach einem der vorhergehenden Ansprüche, wobei die Summe von epoxidierten Fettsäureestern

und epoxidierten Fettsäureglyceriden kleiner 10 Gew.-% beträgt (bezogen auf das Gewicht der Folie).

**9.** Polyesterfolie nach einem der vorhergehenden Ansprüche, wobei die Summe von epoxidierten Fettsäureestern und epoxidierten Fettsäureglyceriden mindestens 1 Gew.-% beträgt (bezogen auf das Gewicht der Folie).

**10.** Polyesterfolie nach einem der Ansprüche 5 bis 9, wobei der Anteil der durch Formel 1 beschriebenen Fettsäureglyceride am Gesamthydrolysestabilisatoranteil größer 40 Gew.-% beträgt.

**11.** Polyesterfolie nach einem der Ansprüche 5 bis 10, wobei der Anteil der durch Formel 2 beschriebenen Fettsäureester am Gesamthydrolysestabilisatoranteil größer 5 Gew.-% beträgt.

**12.** Polyesterfolie nach einem der vorhergehenden Ansprüche, wobei die mittlere Anzahl der Epoxygruppen pro Fettsäureestermolekül größer als 1,5 ist.

**13.** Polyesterfolie nach einem der vorhergehenden Ansprüche, wobei das mittlere Molekulargewicht der epoxidierten Fettsäureester größer als 450 g/mol ist.

**14.** Polyesterfolie nach einem der vorhergehenden Ansprüche, wobei das epoxidierte Fettsäureglycerid ausgewählt wird aus einem oder mehreren epoxidierten Ölen der Gruppe, bestehend aus epoxidiertem Sojabohnenöl, epoxidiertem Leinöl, epoxidiertem Rüböl, epoxidiertem Sonnenblumenöl und epoxidiertem Fischöl.

**15.** Verfahren zur Herstellung einer Polyesterfolie gemäß Anspruch 1, wobei die der Zusammensetzung der Folie entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert und aufgerollt wird, **dadurch gekennzeichnet, dass** sie 0,1 - 5,0 Gew.-% (bezogen auf das Gewicht der Folie) eines Hydrolysestabilisators auf Basis von epoxidierten Fettsäureestern und 0,2 - 10,0 Gew.-% (bezogen auf das Gewicht der Folie) epoxidierte Fettsäureglyceride enthält, wobei die epoxidierten Fettsäureester ein mittleres Molekulargewicht von mindestens 425 g/mol aufweisen.

**16.** Verwendung einer Polyesterfolie nach Anspruch 1 in Außenanwendungen, als Flachbandkabel, als Rückseitenlaminat von Solarmodulen und in Elektroisolieranwendungen.

## Claims

**1.** A biaxially oriented polyester film which contains 0.1-5.0 % by weight (based on the weight of the film) of a hydrolysis stabilizer based on epoxidized fatty acid esters and 0.2-10.0 % by weight (based on the weight of the film) of epoxidized fatty acid glycerides, said epoxidized fatty acid esters having a mean molecular weight of at least 425 g/mol.

**2.** The polyester film as claimed in claim 1, which is white.

**3.** The polyester film as claimed in claim 1 or 2, which comprises one or more additives selected from the group consisting of: inorganic particles, organic particles, flame retardants, free-radical scavengers, antioxidants and UV stabilizers.

**4.** The polyester film as claimed in any of the preceding claims, which comprises, in addition to the polyester, the hydrolysis stabilizer and the additive as claimed in claim 3, less than 5 % by weight of further polymers.

**5.** The polyester film as claimed in any of the preceding claims, wherein more than 80 % by weight of the epoxidized fatty acid glycerides used are glyceryl esters of the formula 1,

formula 1: $CH_2OR,-CHOR_2-CH_2OR_3$

where the $R_1$, $R_2$ and $R_3$ radicals are each independently defined as follows:

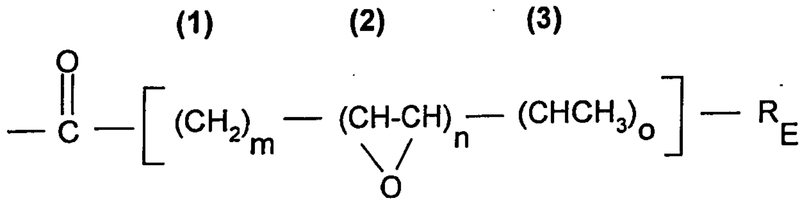

where
$R_E = CH_3$ or H,
m = 1-40,
n = up to 10, and
o = 0-4
and where the sequence of the individual methylene $(CH_2)$- **(1),** epoxy (CHOCH)- **(2)** and $(CHCH_3)$ - (3) groups is as desired
and where $R_{1,2,3}$ radicals where m = 0 are present in glyceryl ester mixtures to an extent of less than 30 % by weight (based on the total weight of the glyceryl esters).

**6.** The polyester film as claimed in any of the preceding claims, wherein more than 90 % by weight of the epoxidized fatty acid esters used are esters of the formula 2:

formula 2: $R_4OR_5$

where $R_4$ is defined as follows:

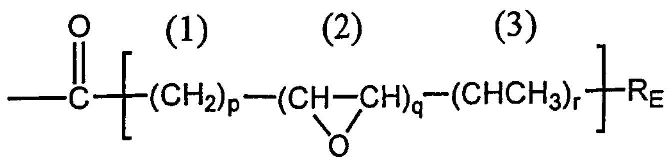

where
$R_E = CH_3$ or H,
p = 1-40,
q = up to 10, and
r = 0-4
and where the sequence of the individual methylene $(CH_2)$ - **(1),** epoxy (CHOCH)- **(2)** and $(CHCH_3)$ - (3) groups is as desired
and where the $R_5$ radical is described by the following formula 3:

formula 3: $-(CH_2)_s-R_6$

where
s = 0-50 and
$R_6$ = H, OH or $C_tH_{(2t+1)}$ where t = 3-10,
$0-((CH_2)_u-O)_v-Y$ where u = 2-5, v = 2-5000 and
Y = H or $CH_3$ or
$O-R_4$, where $R_4$ corresponds to the $R_4$ radical from formula 2.

**7.** The polyester film as claimed in any of the preceding claims, wherein the acid number of the hydrolysis stabilizers used is less than 10 mg KOH per gram (DIN EN ISO 3682).

**8.** The polyester film as claimed in any of the preceding claims, wherein the sum of epoxidized fatty acid esters and epoxidized fatty acid glycerides is less than 10 % by weight (based on the weight of the film).

**9.** The polyester film as claimed in any of the preceding claims, wherein the sum of epoxidized fatty acid esters and

epoxidized fatty acid glycerides is at least 1 % by weight (based on the weight of the film).

**10.** The polyester film as claimed in any of claims 5 to 9, wherein the proportion of the fatty acid glycerides described by formula 1 in the overall hydrolysis stabilizer content is greater than 40 % by weight.

**11.** The polyester film as claimed in any of claims 5 to 10, wherein the proportion of the fatty acid esters described by formula 2 in the overall hydrolysis stabilizer content is greater than 5 % by weight.

**12.** The polyester film as claimed in any of the preceding claims, wherein the mean number of epoxy groups per fatty acid ester molecule is greater than 1.5.

**13.** The polyester film as claimed in any of the preceding claims, wherein the mean molecular weight of the epoxidized fatty acid esters is greater than 450 g/mol.

**14.** The polyester film as claimed in any of the preceding claims, wherein the epoxidized fatty acid glyceride is selected from one or more epoxidized oils from the group consisting of epoxidized soybean oil, epoxidized linseed oil, epoxidized colza oil, epoxidized sunflower oil and epoxidized fish oil.

**15.** A process for producing a polyester film as claimed in claim 1, wherein the melts corresponding to the composition of the film are extruded through a flat die, the film thus obtained is consolidated by drawing it off and quenching it on one or more roll(s) (chill rolls) as substantially amorphous preliminary film, the film is then reheated and biaxially stretched (oriented) and the biaxially stretched film is heatset and rolled up, wherein it contains 0.1-5.0 % by weight (based on the weight of the film) of a hydrolysis stabilizer based on epoxidized fatty acid esters and 0.2-10.0 % by weight (based on the weight of the film) of epoxidized fatty acid glycerides, said epoxidized fatty acid esters having a mean molecular weight of at least 425 g/mol.

**16.** The use of a polyester film as claimed in claim 1 in outdoor applications, as a ribbon cable, as a backside laminate of solar modules and in electrical insulation applications.

**Revendications**

**1.** Feuille de polyester orientée biaxialement, qui contient 0,1 à 5,0 % en poids (par rapport au poids de la feuille) d'un stabilisant contre l'hydrolyse à base d'esters d'acide gras époxydés et 0,2 à 10,0 % en poids (par rapport au poids de la feuille) de glycérides d'acide gras époxydés, dans laquelle les esters d'acide gras époxydés présentent un poids moléculaire moyen d'au moins 425 g/mole.

**2.** Feuille de polyester selon la revendication 1, dans laquelle la feuille est blanche.

**3.** Feuille de polyester selon la revendication 1 ou 2, dans laquelle la feuille contient un ou plusieurs additifs, qui sont choisis dans le groupe constitué des particules inorganiques, des particules organiques, des agents ignifuges, des piégeurs de radicaux, des antioxydants et des stabilisateurs UV.

**4.** Feuille de polyester selon l'une quelconque des revendications précédentes, dans laquelle la feuille contient, outre le polyester, le stabilisant contre l'hydrolyse et l'additif selon la revendication 3, une quantité inférieure à 5 % en poids d'autres polymères.

**5.** Feuille de polyester selon l'une quelconque des revendications précédentes, dans laquelle plus de 80 % en poids des glycérides d'acide gras époxydés utilisés sont des esters de glycérol de formule 1,

Formule 1 : $CH_2OR_1\text{-}CHOR_2\text{-}CH_2OR_3$

dans laquelle les radicaux $R_1$, $R_2$ et $R_3$ ont, indépendamment l'un de l'autre, la signification suivante :

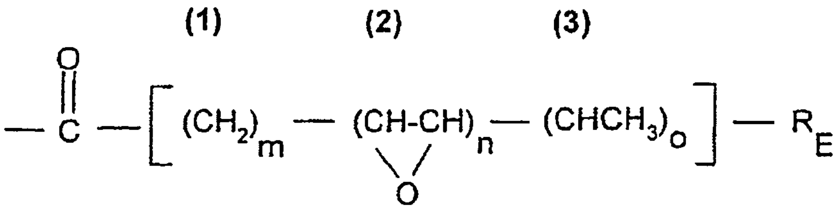

dans laquelle
$R_E$ représente $CH_3$ ou H,
m vaut 1 à 40,
n vaut jusqu'à 10, et
o vaut 0 à 4
et dans laquelle l'ordre des groupements individuels méthylène $(CH_2)$- (1), époxyde (CHOCH)- (2) et $(CHCH_3)$ - (3) est quelconque
et dans laquelle les radicaux $R_{1,2,3}$ avec m = 0 dans des mélanges d'esters de glycérol sont contenus en quantité inférieure à 30 % en poids (par rapport au poids total des esters de glycérol).

**6.** Feuille de polyester selon l'une quelconque des revendications précédentes, dans laquelle plus de 90 % en poids des esters d'acide gras époxydés utilisés sont des esters de formule 2 :

Formule 2 : $R_4OR_5$ dans laquelle $R_4$ a la signification

suivante :

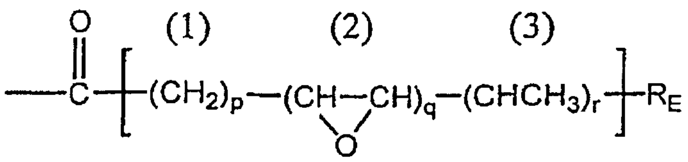

dans laquelle
$R_E$ représente $CH_3$ ou H,
p vaut 1 à 40,
q vaut jusqu'à 10, et
r vaut 0 à 4
et dans laquelle l'ordre des groupements individuels méthylène $(CH_2)$- (1), époxyde (CHOCH)- (2) et $(CHCH_3)$ - (3) est quelconque
et dans laquelle le radical $R_5$ est décrit par la formule 3 suivante :

Formule 3 : $-(CH_2)_s-R_6$

dans laquelle
s vaut 0 à 50 et
$R_6$ représente H, OH ou $C_tH_{(2t+1)}$ avec t = 3 à 10,
$O-((CH_2)_u-O)_v-Y$ avec u = 2 à 5, v = 2 à 5000 et Y = H ou $CH_3$ ou
$O-R_4$, le radical $R_4$ correspondant au radical $R_4$ décrit dans la formule 2.

**7.** Feuille de polyester selon l'une quelconque des revendications précédentes, dans laquelle l'indice d'acidité des stabilisants contre l'hydrolyse utilisés est inférieur à 10 mg de KOH par gramme (norme DIN EN ISO 3682).

**8.** Feuille de polyester selon l'une quelconque des revendications précédentes, dans laquelle la somme des esters d'acide gras époxydés et des glycérides d'acide époxydés est inférieure à 10 % en poids (par rapport au poids de la feuille).

**9.** Feuille de polyester selon l'une quelconque des revendications précédentes, dans laquelle la somme des esters d'acide gras époxydés et des glycérides d'acide époxydés est d'au moins 1 % en poids (par rapport au poids de la feuille).

**10.** Feuille de polyester selon l'une quelconque des revendications 5 à 9, dans laquelle la proportion des glycérides d'acide gras décrits par la formule 1 sur la proportion totale de stabilisants contre l'hydrolyse est supérieure à 40 % en poids.

**11.** Feuille de polyester selon l'une quelconque des revendications 5 à 10, dans laquelle la proportion des esters d'acide gras décrits par la formule 2 sur la proportion totale de stabilisants contre l'hydrolyse est supérieure à 5 % en poids.

**12.** Feuille de polyester selon l'une quelconque des revendications précédentes, dans laquelle le nombre moyen de groupements époxy par molécule d'ester d'acide gras est supérieur à 1,5.

**13.** Feuille de polyester selon l'une quelconque des revendications précédentes, dans laquelle le poids moléculaire moyen des esters d'acide gras époxydés est supérieur à 450 g/mole.

**14.** Feuille de polyester selon l'une quelconque des revendications précédentes, dans laquelle le glycéride d'acide gras époxydé est choisi parmi une ou plusieurs huiles époxydées tirées du groupe constitué de l'huile de soja époxydée, de l'huile de lin époxydée, de l'huile de navette époxydée, de l' huile de tournesol époxydée et de l' huile de poisson époxydée.

**15.** Procédé de fabrication d'une feuille de polyester selon la revendication 1, dans lequel les masses fondues correspondant à la composition de la feuille sont extrudées à travers une filière plate, la feuille obtenue de la sorte est retirée et brusquement refroidie à des fins de solidification sur un ou plusieurs cylindre(s) (cylindre de refroidissement) pour donner une première feuille largement amorphe, la feuille est ensuite à nouveau chauffée et étirée (orientée) biaxialement et la feuille étirée biaxialement est soumise à une thermofixation et enroulée, **caractérisé en ce qu'**elle contient 0,1 à 5,0 % en poids (par rapport au poids de la feuille) d'un stabilisant contre l'hydrolyse à base d'esters d'acide gras époxydés et 0,2 à 10,0 % en poids (par rapport au poids de la feuille) de glycérides d'acide gras époxydés, dans laquelle les esters d'acide gras époxydés présentent un poids moléculaire moyen d'au moins 425 g/mole.

**16.** Utilisation d'une feuille de polyester selon la revendication 1, dans des applications en extérieur, comme câble en ruban plat, comme stratifié en plan arrière de modules solaires et dans des applications d'électroisolation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5885709 A
- EP 0838500 A
- CH 621135 A
- EP 1634914 A
- EP 1842871 A
- US 3981737 A
- EP 0861299 A
- FR 2812299
- EP 0738749 A
- US 3432591 A


### In der Beschreibung aufgeführte Nicht-Patentliteratur


- Römpp Chemie Lexikon. Georg Thieme Verlag
- **Gächter Müller.** Kunststoffadditive. Carl Hanser-Verlag
- **Dr. Hans Zweifel.** Plastics Additives Handbook. Carl Hanser-Verlag